# EUROPÄISCHE PATENTSCHRIFT

(11) **EP 2 367 765 B1**
(45) Veröffentlichungstag und Bekanntmachung des Hinweises auf die Patenterteilung: **18.09.2019**
(21) Anmeldenummer: 09748732.6
(22) Anmeldetag: 19.10.2009
(51) Int. Cl.: C02F 1/76, A01N 59/00, C01B 11/02

(54) **VERFAHREN ZUR BEHANDLUNG VON WASSER UND WÄSSRIGEN SYSTEMEN IN ROHRLEITUNGEN MIT CHLORDIOXID**
METHOD FOR TREATING WATER AND AQUEOUS SYSTEMS IN PIPELINES WITH CHLORINE DIOXIDE
PROCÉDÉ DE TRAITEMENT D'EAU ET DE SYSTÈMES AQUEUX DANS DES CANALISATIONS AU MOYEN DE DIOXYDE DE CHLORE

(30) Priorität: 19.12.2008 DE 102008055016
(43) Veröffentlichungstag der Anmeldung: 28.09.2011
(73) Patentinhaber: Evonik Degussa GmbH, 45128 Essen (DE)
(72) Erfinder: DUVE, Johannes, 48249 Dülmen (DE)
(74) Vertreter: Evonik Patent Association
(86) Internationale Anmeldenummer: PCT/EP2009/063637
(87) Internationale Veröffentlichungsnummer: WO 2010/069632

(56) Entgegenhaltungen:
- WO-A1-2005/087657
- WO-A1-2009/077160
- WO-A1-2009/077309
- DE-A1-102006 060 578
- JP-A- 2008 094 662
- US-A- 5 324 497

## Beschreibung

Die Erfindung betrifft ein Verfahren zur Behandlung von Wasser und wässrigen Systemen - im Folgenden die zu behandelnden Systeme genannt - in Rohrleitungen mit Chlordioxid (ClO₂).

Chlordioxid wird wegen hoher bakterizider, virizider und algizider Wirkung in der Wasseraufbereitung und zur Behandlung von wässrigen Systemen verwendet. Wässrige Systeme werden in einer Vielzahl von technischen Prozessen, wie z. B. in der Lebensmittelindustrie, bei Brauprozessen, in der Getränkeindustrie und bei der Papierherstellung unter anderem als Transportmittel, als Heiz- und Kühlmittel und zu Waschzwecken verwendet. Der Transport der wässrigen Systeme innerhalb der technischen Prozesse erfolgt vorrangig in Rohrleitungen. In der Regel muss das biologische Wachstum in diesen Systemen durch Verwendung von Bioziden, wie z. B. Chlordioxid, begrenzt werden. Auf Grund der Explosionsneigung von gasförmigem Chlordioxid (c > 300 g/m³) und Chlordioxidlösungen (c > 26 g/l), kann Chlordioxid nicht in komprimierter Form oder in Lösungen mit höheren Konzentrationen gelagert werden. Auf Grund dieser chemischen Eigenschaften muss Chlordioxid am Verwendungsort hergestellt werden. Dies geschieht durch Mischen von Grundchemikalien in speziellen Reaktoren von Chlordioxiderzeugungsanlagen. Die Chemikalienvorratsbehälter, die Dosiereinrichtungen sowie der Reaktor der Chlordioxidanlagen bilden eine apparative, örtlich zusammenhängende Einheit, welche in der Regel in personenbegangenen Räumen aufgestellt ist.

Es gibt mehrere, aber hauptsächlich drei grundlegende Verfahren, für die Synthese von ClO₂, die kommerziell zur Wasserbehandlung benutzt werden. Diese Verfahren benutzen Natriumchlorit (NaClO₂) als eines der Ausgangsmaterialien. Die grundlegende Chemie der drei Verfahren ist nachstehend erläutert. Die dabei eingesetzten Stoffe werden als Einsatzchemikalien oder auch Reaktanten bezeichnet.

### 1. Verfahren mit Natriumchlorit und starker Säure

Im ersten Verfahren wird eine starke Säure zusammen mit Natriumchlorit eingesetzt. Die starke Säure ist meistens Chlorwasserstoffsäure oder Schwefelsäure. Unter Verwendung von Chlorwasserstoffsäure lautet die Reaktionsstöchiometrie:

5 NaClO₂ + 4 HCl → 4 ClO₂ + 5 NaCl + 2 H₂O

Außerdem kann Chlordioxid unter Verwendung von Schwefelsäure entsprechend der nachstehenden Reaktion gebildet werden:

10 NaClO₂ + 5 H₂SO₄ → 8 ClO₂ + 5 Na₂SO₄ + 2 HCl + 4 H₂O

### 2. Verfahren ausgehend von Natriumchlorit und Chlor

Dieses Verfahren verwendet gasförmiges Chlor zusammen mit Natriumchlorit. Die Reaktion läuft in zwei Stufen ab, zuerst mit der Bildung von Chlorwasserstoffsäure.

Cl₂ + H₂O → HOCl + HCl

Das Zwischenprodukt, Hypochlorsäure (HOCl), reagiert dann mit Natriumchlorit unter Bildung von Chlordioxid (ClO₂).

HOCl + HCl + 2 NaClO₂ → 2 ClO₂ + 2 NaCl + H₂O

Die stöchiometrische Reaktion aus den beiden Gleichungen ist

Cl₂ + 2 NaClO₂ → 2 ClO₂ + 2 NaCl

### 3. Verfahren ausgehend von Natriumchlorit und Natriumhypochlorit

Im dritten Verfahren wird Natriumhypochlorid (NaOCl) zusammen mit Natriumchlorit verwendet:

NaOCl + HCl → NaCl + HOCl

HCl + HOCl + 2 NaClO₂ → 2 ClO₂ + 2 NaCl + H₂O

Die Synthesereaktionen zur Erzeugung von Chlordioxid werden in der Regel in Reaktoren durchgeführt, die entweder kontinuierlich oder nach dem Batch-Verfahren betrieben werden.

Zwei Explosionsgrenzen müssen bei der Chlordioxiderzeugung berücksichtigt werden: Mehr als 6 g ClO₂/l Lösung [Kontakt mit Luft] und mehr als 26 g ClO₂/l Lösung [Eigenzersetzung der wässrigen Lösung]. Bei den nach Verfahren 1 bis 3 durchgeführten Chlordioxidsynthesen wird bei der Verwendung von Einsatzchemikalien, die im Reaktionsraum zu einer Konzentration von größer ca. 26 g ClO₂/l Lösung führen würden, dem Reaktionsraum Verdünnungswasser zugegeben, um diese Konzentration der spontanen Eigenzersetzung zu unterschreiten. Die den Reaktionsraum verlassende Chlordioxidlösung, die in der Regel 20 g ClO₂/l oder weniger enthält, wird mit einem weiteren Wasserstrom auf Konzentrationen von etwa kleiner 3 g ClO₂/l Lösung verdünnt.

Damit die zum Stand der Technik gehörenden Verfahren mit befriedigenden Ergebnissen bezüglich Anlagensicherheit, Chlordioxid-Ausbeute und zeitspezifischer Erzeugungsleistung betrieben werden können, werden verschiedene verfahrenstechnische Variationen vorgenommen, unter anderem,
- Einrichtung und Verwendung von Dosierstellen an Rohrleitung mit zu behandelnden Systemen zur Zugabe von außerhalb der Rohrleitung erzeugtem Chlordioxid.
- Verwendung von verdünnten Einsatzchemikalien: Unterschreitung der Konzentrationen der erzeugten Chlordioxid-Lösung auf kleiner 26 g/l bzw. kleiner 6 g/l.
- Erzeugung von Unterdruck im Reaktor durch Anlegen eines Vakuums: Reduzierung der Chlordioxid-Konzentration in der Gasphase auf < 300 g/m³.
- Erzeugung von Reaktorüberdruck, z. B. durch Verwendung von Druckhalteventilen an Reaktorausgang: Verhinderung der Entstehung einer Gasphase durch Überschreitung der Löslichkeitsgrenze von Chlordioxid; Erhöhung der Ausbeute.
- Verwendung von Batch-Verfahren mit langen Reaktionszeiten: Erhöhung der Ausbeute bei Verwendung von verdünnten Einsatzchemikalien.
- Einsatz von überstöchiometrischen Säuremengen beim Chlorit/Säure-Verfahren und Einsatz von überstöchiometrischen Chlormengen beim Chlorit/Chlor-Verfahren: Erhöhung der Ausbeute.

Trotz Anwendung dieser Verfahrensweisen kann es bei einem nicht bestimmungsgemäßen Betrieb der Chlordioxiderzeugungsanlagen, z. B. durch Ausfall des Verdünnungswassers oder durch Versagen der Druckreglung zu einer Spontanzersetzung (Explosion) von Chlordioxid kommen, oder Chlordioxid kann durch Undichtigkeiten oder Bruch von Trennflächen zwischen der chlordioxidhaltigen Lösung und der Umgebung zu Gefährdungen im Umfeld der Erzeugungsanlagen führen. Auch die Verwendung von verdünnten Einsatzchemikalien, die zu Chlordioxidlösungen mit einer Konzentration von kleiner 6 g/l führen, und damit der Verzicht auf höhere zeitspezifische Erzeugungsleistungen der Chlordioxidanlagen, kann die Gefährdung der Umgebung der Erzeugungsanlagen durch Überschreitung des MAK-Wertes von 0,1 ppm bei nicht bestimmungsgemäßem Betrieb nicht ausschließen. Um diese Gefährdungen zu minimieren, werden verschiedene Maßnahmen an den Erzeugungsanlagen selbst, als auch an den Aufstellorten der Chlordioxiderzeugungsanlagen realisiert, z. B. aufwendige Wartungsarbeiten an den Erzeugungsanlagen inklusive dem regelmäßigen Austausch der Reaktoren, räumlich isolierte Aufstellorte für die Erzeugungsanlagen, Zwangsbelüftung und Luftüberwachung der Atmosphäre der Aufstellorte durch kontinuierliche Gasanalysen.

Nach der Herstellung der chlordioxidhaltigen Lösungen werden diese, gemäß dem Stand der Technik, mit Druckerhöhungseinrichtungen in die Rohrleitungen gefördert, in welchen sich die zu behandelnden Systeme befinden. Dieses geschieht beispielsweise über in der Rohrleitung befindliche Anschlussstutzen. Die Dosierleitung für die chlordioxidhaltige Lösung, welche in die Rohrleitung mit den zu behandelnden Systemen hinein ragt, kann nur nach Freistellung dieser Rohrleitung bearbeitet werden. Freistellung bedeutet in diesem Fall Drucklosstellung und Entleerung der systemführenden Rohrleitung. Die Zugabestellen für Chlordioxid liegen häufig in Bypassleitungen, welche vor und hinter der Zugabestelle mit Absperrorganen versehen sind.

WO 2005/087657 A offenbart einen Reaktor, der in einer wasserführenden Rohrleitung fixiert ist. Zur Behandlung von Wasser in der Rohrleitung wird Chlordioxid in dem Reaktor aus zufließenden Ausgangschemikalien in situ erzeugt. Das entstandene Chlordioxid wird aus dem Reaktor direkt in das den Reaktor umströmende Wasser abgegeben.

JP 2008 094662 A zeigt einen Reaktor in einer Rohrleitung, wobei der Reaktor zusätzlich von einer Einhausung umschlossen ist. Im Reaktor wird ebenfalls Chlordioxid generiert. Das erzeugte Chlordioxid wird aus dem in das vorbeiströmende Wasser abgegeben.

Es ergibt sich somit die Aufgabe, die Behandlung von Wasser und wässrigen Systemen - im Folgenden die zu behandelnden Systeme genannt -, welche sich in Rohrleitungen befinden, mit Chlordioxid sicherer und effizienter auszulegen. Speziell stellt sich die Aufgabe, bei hoher zeitspezifischer Erzeugungsleistung der Chlordioxidverfahren, das Gefährdungspotenzial dieser Art der Behandlung zu minimieren und gleichzeitig den Aufwand für die Sicherheitseinrichtungen zu reduzieren. Alle notwendigen Verfahrensschritte sollten unabhängig von Druckzustand der Rohrleitung, welche das zu behandelnde System enthält, durchführbar sein.

Es sollte ein sicheres Verfahren für Umwelt und Personen gefunden werden unter Vermeidung von Austritt von ClO₂ in die Umwelt, insbesondere in die Räume, in denen die Anlage üblicherweise betrieben wird. Gleichzeitig sollten die Vorteile, die sich durch die Verwendung von konzentrierten Einsatzchemikalien ergeben, wie z. B. geringerer Stofftransport, höhere Reaktionsgeschwindigkeit, höhere Ausbeuten, geringeres Reaktorvolumen nutzbar gemacht werden und die notwendigen Montage- und Wartungsarbeiten für die Chlordioxidbehandlung von zu behandelnden Systemen in Rohrleitungen unabhängig vom Druckzustand der systemführenden Rohrleitung durchführbar sein.

Gegenstand der Erfindung ist ein Verfahren zur Behandlung von Wasser und wässrigen Systemen in Rohrleitungen mit Chlordioxid, gekennzeichnet durch die Merkmale
1. der Reaktionsraum, in dem das ClO₂ erzeugt wird, ist vollständig von dem zu behandelnden System umgeben,
2. das den Reaktionsraum umgebene System ist gleichzeitig das zu behandelnde System,
3. der Reaktionsraum ist Bestandteil einer mobilen Vorrichtung und die mobile Vorrichtung kann in die Rohrleitung, in der sich das zu behandelnde System befindet, eingebracht und wieder entfernt werden, unabhängig von Druckzustand der Rohrleitung mit dem zu behandelnden System,
4. der Reaktionsraum befindet sich nach der Verwendung der mobilen Vorrichtung in der Rohrleitung mit dem zu behandelnden System,
5. das im Reaktionsraum erzeugte ClO₂ wird in das in der Rohrleitung befindliche, zu behandelnde System abgegeben, dadurch gekennzeichnet, dass die mobile Vorrichtung mit dem Reaktionsraum in einem Führungskanal geführt und bewegt wird, welcher einen Zugang zu der Rohrleitung mit dem zu behandelnden System hat, wobei ein Absperrorgan den Führungskanal gegen die Rohrleitung abschiebert.

Überraschenderweise konnte die Aufgabe durch die Maßnahmen gemäß den Ansprüchen und der Beschreibung gelöst werden.

Erfindungswesentlich für das vorliegende Verfahren sind die Merkmale 1. bis 5. in ihrer Kombination, welches ein sicheres Arbeiten durch Vermeidung des Austritts von ClO₂ in Arbeitsräume oder die Umwelt ermöglicht und negative Auswirkungen explosionsartiger Zersetzungen beseitigt. Der Reaktionsraum ist Bestandteil einer mobilen Vorrichtung, welche unabhängig von Druckzustand der Rohrleitung in diese verbracht und wieder entfernt werden kann. Der Reaktionsraum, in dem das ClO₂ erzeugt wird, ist Bestandteil einer mobilen Vorrichtung und nach Einbringung in die Rohrleitung vollständig von Wasser oder einem wässrigen System umgeben und dieses ist gleichzeitig das zu behandelnde System.

Die Verlagerung des Entstehungsortes des Chlordioxids, heraus aus den personenbegangenen Räumlichkeiten und dem Lagerort der Einsatzchemikalien, erhöht die Sicherheit signifikant. Undichtigkeiten, bis hin zu Explosionen des Reaktionsraums, werden durch das große Volumen der zu behandelnden Systeme praktisch neutralisiert. Der Reaktionsraum kann in eine, von zu behandelndem System durchflossene und unter Druck stehende Rohrleitung eingebracht werden, und aus dieser auch wieder entfernt werden, ohne den Transport und damit die Nutzung des zu behandelnden Systems in der Rohrleitung zu unterbrechen. Außerdem befindet sich der Reaktionsraum bevorzugt in der Hauptrohrleitung des zu behandelnden Systems und nicht in einer Bypassleitung zur Hauptleitung, welche durch vor und hinter dem in der Bypassleitung liegenden Zugabeort von Chlordioxid zum zu behandelnden System befindliche Absperrorgane, räumlich isolierbar ist.

Die Vorteile des neuen Verfahrens werden im Folgenden näher erläutert.
Die Zugabe von Chlordioxid zu einem, in einer Rohrleitung befindlichen, zu behandelnden System, kann an jedem Ort und bei jedem Druckzustand der Rohrleitung eingerichtet werden. Eine Undichtigkeit des Reaktionsraums, insbesondere des Reaktors, welcher sich in einer Rohrleitung befindet, kann im kontinuierlich an dessen Wand vorbeiströmenden zu behandelnden System einfach und sicher gehandhabt werden. Das bei einer Undichtigkeit des Reaktionsraums insbesondere austretende Chlordioxid wird auf eine unkritische Konzentration verdünnt und abtransportiert. Gleiches gilt für die gegebenenfalls aus dem Reaktionsraum, insbesondere des Reaktors, austretenden Einsatzchemikalien. Da die Synthese von Chlordioxid aus konzentrierten Einsatzchemikalien ohne Verdünnung durch Wasser erfolgen kann, die notwendigen überstöchiometrischen, umsatzsteigernden Mehrmengen an Säure bzw. Chlor verringert werden können und es zusätzlich zu einer signifikanten Erhöhung der Reaktionsgeschwindigkeit kommt, ergibt sich eine hohe spezifische Erzeugungsleistung des Reaktionsraums. Durch die Verringerung der notwendigen mittleren Verweilzeit der Reaktanten im Reaktionsraum besteht die Möglichkeit, das Reaktionsraumvolumen zu minimieren, wodurch z. B. der Einbau des Reaktionsraums, insbesondere des Reaktors in eine Rohrleitung möglich wird, welche von zu behandelndem System durchflossen wird.

Außerdem ergibt sich aus sicherheitstechnischer Sicht eine Verbesserung des Verhältnisses zwischen der im Reaktionsraum während der Synthese permanent vorhandenen Chlordioxidmenge und der Menge an zu behandelndem System.

Die Verlagerung des Entstehungsortes des Chlordioxids, heraus aus den personenbegangenen Räumlichkeiten und dem Lagerort der Einsatzchemikalien, erhöht die Sicherheit signifikant. Reaktionsraumundichtigkeiten, bis hin zu Reaktionsraumexplosionen, werden durch das große Volumen an zu behandelndem System, relativ zu der im Reaktionsraum vorhandenen Menge an Chlordioxid, praktisch neutralisiert. Bevorzugt befindet sich der Zugabeort des Chlordioxids zum zu behandelnden System nicht in einer Bypassleitung zur Hauptleitung des zu behandelnden Systems, welche durch vor und hinter dem in der Bypassleitung liegenden Zugabeort befindliche Absperrorgane, räumlich isolierbar ist, sondern direkt in der Hauptleitung. Hierdurch kann die nicht bestimmungsgemäße Zugabe von Chlordioxid in einen Raum mit begrenztem Volumen und ohne Erneuerung des zu behandelnden Systems (durch Absperrorgane isolierter Raum) und die sich daraus ergebenden Gefährdungen sicher verhindert werden. Die hohe Flexibilität des erfindungsgemäßen Verfahrens erweitert die Anwendungsgebiete der Chlordioxidbehandlung erheblich und reduziert neben dem Gefährdungspotential durch die Einsatzchemikalien und dem Chlordioxid gleichzeitig den technischen Aufwand für die Behandlung von zu behandelnden Systemen in Rohrleitungen.

Erfindungswesentlich für das vorliegende Verfahren sind die Merkmale 1. bis 5. in ihrer Kombination, welches neben der Flexibilität des Biozidbehandlungsverfahrens ein sicheres Arbeiten, auch unter Verwendung von konzentrierten Einsatzchemikalien, durch Vermeidung des Austritts von ClO₂ in Arbeitsräume oder die Umwelt ermöglicht und negative Auswirkungen explosionsartiger Zersetzungen beseitigt.

Der Reaktionsraum, in dem das ClO₂ erzeugt wird, ist vollständig von zu behandelnden Systemen umgeben und das den Reaktionsraum umgebende, zu behandelnde System, ist gleichzeitig das zu behandelnde System.

Der Einsatz eines Reaktors als Reaktionsraum ist bevorzugt.

Gemäß den Verfahrensschritten 3. und 4. ist der Reaktionsraum Bestandteil einer mobilen Vorrichtung, die bevorzugter Weise aus einem kolbenförmigen Rohr besteht, in welcher sich der Reaktionsraum befindet, und wobei diese mobile Vorrichtung über einen Reaktionsraumauslass und über Zuleitungen für die Reaktanten und gegebenenfalls Verdünnungswasser verfügt. Die mobile Vorrichtung, bevorzugt das kolbenförmige Rohr, mit dem Reaktionsraum wird in einen Führungskanal, bevorzugt ein zylinderförmiges Außenrohr geführt und bewegt, welches, durch ein Absperrorgan gegen die Rohrleitung mit dem zu behandelnden System abgeschiebert, einen Zugang zu der Rohrleitung mit dem zu behandelnden System hat. Nach dem Einbringen der mobilen Vorrichtung, bevorzugt des kolbenförmigen Rohres mit dem Reaktionsraum in den Führungskanal, bevorzugt in das zylinderförmige Außenrohr, kann das Absperrorgan geöffnet werden und die mobile Vorrichtung, bevorzugt das kolbenförmige Rohr mit dem Reaktionsraum kann in die Rohrleitung mit den zu behandelnden System eingebracht werden. Bevorzugt werden die Zuleitungen für die Reaktanten und gegebenenfalls Verdünnungswasser von oben in die mobile Vorrichtung und in den Reaktionsraum geführt. Ebenfalls sind beispielsweise Konstruktionen möglich, bei denen die Zuleitungen außerhalb des Reaktionsraums, bevorzugt Reaktors, zum Eingang des Reaktionsraumes geführt werden, wie z.B. von der Seite oder von unten.

Es ist möglich im Verfahrensschritt 5. das entstandene ClO₂ ohne Umwege oder weitere zusätzliche Leitungen direkt aus dem Reaktionsraum, in dem das ClO₂ entsteht, in das zu behandelnde System abzugeben, da sich der Auslass direkt am Ende des Reaktionsraums, bevorzugt des Reaktors, befindet und damit ebenfalls vom zu behandelnden System umgeben ist. Bevorzugt befindet sich der Reaktionsraum in der Hauptrohrleitung des zu behandelnden Systems und nicht in einer Bypassleitung zur Hauptleitung, welche durch vor und hinter dem in der Bypassleitung liegenden Zugabeort von Chlordioxid zum zu behandelnden System befindliche Absperrorgane, räumlich isolierbar ist. Diese Maßnahme ist die bevorzugte Variante des Verfahrens.

Die Erneuerungsrate des zu behandelnden Systems am Auslass des Reaktionsraums, bevorzugt des Reaktorauslasses, wird durch den Massenfluss des zu behandelnden Systems und die geometrischen Verhältnisse in der Rohrleitung beeinflusst. Befindet sich der Reaktionsraumauslass, beispielsweise an der Abströmseite des zu behandelnden Systems am Reaktionsraum, entstehen unterdruckerzeugende Wirbel, die die Verteilung des erzeugten Chlordioxids im zu behandelnden System beschleunigen.

Der Reaktionsraum, bevorzugt der Reaktor, wird bevorzugt ohne eine Druckregeleinrichtung betrieben. Über einen freien Ausgang am Ende des Reaktionsraums, bevorzugt des Reaktors, wird sichergestellt, dass der Druck im Reaktionsraum nur bis zu dem Wert ansteigen kann, welcher durch das umgebende zu behandelnde System auf den Reaktionsraum ausübt wird.

Die Konzentration des sich im Reaktionsraum, bevorzugt im Reaktor bildenden Chlordioxids kann in Kombination mit Druck und Temperatur des umgebenden zu behandelnden Systems so eingestellt werden, dass die Löslichkeitsgrenze von Chlordioxid im zu behandelnden System nicht überschritten wird. Dadurch kann die Entstehung eines 2-Phasensystems durch eine sich bildende Chlordioxid-Gasphase verhindert werden.

Die Druckverhältnisse für einen, in einer Rohrleitung eingesetzten Reaktor, können beispielsweise durch in die Rohrleitung integrierte Absperrorgane beeinflusst werden. Außerdem kann durch in der Rohrleitung befindliche Armaturen die Turbulenz der Strömung des zu behandelnden Systems und damit die Verteilung des zugesetzten Chlordioxids im zu behandelnden System verändert werden.

Wird das zu behandelnde System am Auslass des Reaktionsraums, bevorzugt des Reaktors, mit entsprechender Rate erneuert, so kann die Konzentration der den Reaktionsraum, bevorzugt Reaktor, verlassenden Chlordioxidlösung schlagartig in einen Milligrammbereich verschoben werden.

Prinzipiell können alle chemischen Herstellverfahren von ClO₂ in dem Reaktionsraum angewendet werden, insbesondere die einleitend beschriebenen Verfahren 1. bis 3., oder auch ausgehend von Chlorat.

Bevorzugt in dieser Erfindung ist das Salzsäure-Chlorit-Verfahren (1.). Dabei können die Einsatzchemikalien (Reaktanten) aus Alkali-Chlorit-Salz, bevorzugt Natriumchlorit in wässrigen Lösungen von 3,5 % bis 40 % vorliegen. Die Säure ist bevorzugt Salzsäure in einer Konzentration von 3,5 % bis 42 %.

Bei der besonders bevorzugten Ausführungsform der Erfindung werden konzentrierte Einsatzchemikalien eingesetzt und es wird nach dem Salzsäurechlorit-Verfahren (1.) gearbeitet. Die Konzentration der Salzsäure beträgt dann etwa 33 - 42 % und die der Natriumchlorit-Lösung beträgt etwa 25 - 40 %. Eine Verdünnung der Einsatzchemikalien vor oder im Reaktionsraum, bevorzugt Reaktor, wird nicht vorgenommen.

Die Einsatzchemikalien (Reaktanten), insbesondere Säure und Chlorit werden als wässrige Lösung, wie oben beschrieben, getrennt durch Eigendruck der Lösungen oder mit Hilfe vom Pumpen in den Reaktionsraum gefahren und zur Reaktion gebracht.

Bei der bevorzugten Fahrweise werden die Reaktanten als konzentrierte Lösungen eingesetzt und es wird auf die Verwendung von Verdünnungswasser verzichtet, so dass sich die Chlordioxidkonzentration am Ende des Reaktionsraums, bevorzugt am Reaktorausgang, oder der Ableitung, auf größer 80 g/l Lösung einstellt. Alternativ kann Verdünnungswasser verwendet werden, um die Chlordioxidkonzentration am Ende des Reaktionsraums, bevorzugt am Reaktorausgang, oder der Ableitung, zwischen größer 3 g/l Lösung bevorzugt größer 26 g/l Lösung und besonders bevorzugt größer 80 g/l Lösung einzustellen.

Die Vorrichtung zur Durchführung des erfindungsgemäßen Verfahrens umfasst im Wesentlichen geeignete Vorrichtungen und Apparaturen. Die Vorrichtung schließt typischerweise einen oder mehrere Tanks für die Einsatzchemikalien (Reaktanten), insbesondere einen Säurelagertank und einen Chloritlagertank ein, wobei eine wässrige Säurelösung in dem Säurelagertank und eine Lösung eines Alkalimetallsalzes eines Chloritions in dem Chloritlagertank gespeichert wird. Apparaturen sind vorgesehen, die sowohl die geeigneten Bestandteile in den Lagertanks einspeisen als auch Lösungen entnehmen zu können. Vorzugsweise schließen diese Apparaturen Pumpen und Zuleitungen ein, die ausreichen, um die Strömungsraten der Einsatzchemikalien (Reaktanten), insbesondere von wässrigen Säurelösungen und Lösungen von Alkalimetallsalzen eines Chloritions, sowie von Verdünnungswassermenge zu gewährleisten. Fachleute auf dem Gebiet können leicht geeignete Größen für die betreffenden Lagertanks, Zuleitungen und Pumpen bestimmen, um die erforderlichen Einspeisungsraten von Reaktantenlösungen zu bewerkstelligen (d. h. z. B. wässrige Säurelösungen, Lösungen eines Alkalimetallsalzes eines Chloritions).

Bevorzugt weist die Vorrichtung Ausführungsformen mit mindestens zwei Pumpen für zwei Einsatzchemikalien (Reaktanten) auf, insbesondere aber eine für die Lösung des Alkalimetallsalzes eines Chloritions und die andere für die wässrige Säurelösung.

Die Vorrichtung umfasst des Weiteren eine Apparatur zum Mischen der Lösung der Einsatzchemikalien (Reaktanten), insbesondere die Lösung, die das Alkalimetallsalz eines Chloritions enthält und der wässrigen Säurelösung, um eine wässrige Reaktionslösung der Einsatzchemikalien (Reaktanten) bereitzustellen. Es kann jede Apparatur, die die vorgenannten Lösungen ausreichend mischt, verwendet werden, einschließlich herkömmlicher T-Stücke oder anderer Verbindungselemente, die zwei Ströme, bzw. drei Ströme zu einem vereinen, Drosselleitungen und/oder eines Rührgefäßes. Die wässrige Reaktionslösung kann dann nach dem Mischen in den Reaktionsraum eingespeist werden. Bevorzug erfolgt das Mischen der beiden Reaktanten und des gegebenenfalls verwendeten Verdünnungswasser im Reaktionsraum. Der Mischvorgang kann durch jede Einrichtung eingeleitet werden, wie z. B. Prallbleche, Injektoren oder Füllkörper, welche ein optimales Mischen gewährleistet.

Als Reaktionsraum kann jeglicher Reaktor, der zur Auslösung der Reaktion zwischen den Einsatzchemikalien (Reaktanten), insbesondere der wässrigen Säurelösung und dem Alkalimetallsalz eines Chloritions, in der Lage ist, eingesetzt werden, einfache Tanks, Massen- bzw. Pfropfenflussreaktoren und Rohrreaktoren. Ein Rohrreaktor ist besonders bevorzugt. Normalerweise besteht eine Chlordoxiderzeugungseinheit nur aus einem Rohrreaktor, jedoch kann die Erzeugungsleistung einer Einheit durch die parallele Anordnung mehrer Reaktoren, zum Beispiel zu einem Rohrbündel, erhöht werden. Der Reaktor kann sowohl temperaturgeregelt sein, als auch aus einem gut wärmeleitenden Material bestehen, um freiwerdende Reaktionswärme an das umgebende, zu behandelnde System abzugeben. Der Werkstoff, aus dem der Reaktor gefertigt wird, besteht aus Materialien, die gegen die jeweiligen Reaktionslösungen eine gute Beständigkeit aufweisen. Bei der Erzeugung von Chlordioxidlösungen mit Konzentrationen von größer 28 g/l wird als Reaktormaterial beispielsweise Titan, Alloy 31, Glas oder Chemiewerkstoffe, z. B. Polymere wie z. B. PVDF oder PTFE verwendet. Bei Verwendung von Titan als Reaktormaterial erfolgt die Zuführung der Reaktionslösungen so, dass bei Verwendung von Salzsäure, diese nicht mit der Titanoberfläche in Berührung kommt, ohne dass gleichzeitig der Reaktionspartner, bei welchem es sich in jedem Fall um ein Oxidationsmittel handelt (z. B. Natriumchlorit), anwesend ist. Durch diese Verfahrensweise wird Titankorrosion verhindert, da die korrosionauslösende Eigenschaft der Salzsäure unter oxidierenden Bedingungen aufgehoben wird. Realisiert werden kann dieser Zustand z. B. dadurch, indem die Zuführung der Salzsäure über eine Leitung aus Kunststoff in die Mitte des Reaktors -größtmöglicher Abstand zur Titanoberfläche - erfolgt und der oxidierend wirkende Reaktionspartner ortsnah zur Salzsäurezugabestelle erfolgt. Das ClO₂ wird aus dem Reaktor durch einen beliebigen Mechanismus abgeführt, der zur Abführung einer wässrigen Lösung aus einem Reaktor in der Lage ist. Vorzugsweise wird die Reaktion kontinuierlich ausgeführt, und ClO₂ wird kontinuierlich aus dem Reaktor abgeführt. Nach dem Verlassen des Reaktors wird das ClO₂ direkt in das zu behandelnde System dosiert.

Ein Rohrreaktor kommt bevorzugt gemäß der vorliegenden Erfindung zum Einsatz. Allgemein ist das Rohr des Rohrreaktors so konstruiert, dass es eine ausreichende Länge hat, um für ausreichend Verweildauer in dem Reaktor zu sorgen, um die Bestandteile angesichts der Strömungsrate der Reaktionslösung, ihrer Konzentration an Reaktanten und der Temperatur der Reaktionslösung ausreichend umzusetzen. Ein besonders bevorzugter Reaktor, der zur Herstellung eines geeigneten Generators von wässrigem Chlordioxid vor Ort eingesetzt werden kann, ist ein Rohrreaktor, der eine oder mehrere Rohrschlangen enthält. Fachleute auf dem Gebiet sind in der Lage, die Größe und Gestalt des Reaktors in Abhängigkeit von der Menge des herzustellenden wässrigen Chlordioxids, der Strömungsrate und Konzentration der Reaktanden, dem pH-Wert der wässrigen Reaktionslösung, dem pH-Wert des ClO₂ und der Temperatur des Reaktors zu variieren. Fachleute auf dem Gebiet sind ebenfalls in der Lage, die Temperatur des Reaktors entsprechend zu modifizieren.

Die Reaktionszeit im Reaktionsraum kann variieren. Mit zunehmender Konzentration der Reaktanten im Reaktionsraum verringert sich das Optimum der Verweilzeit. Wird eine Lösung mit einer Chlordioxidkonzentration von 20 g/l hergestellt, liegt die mittlere Reaktorverweilzeit bei etwa 60 Minuten bis 4 Minuten, bevorzugt bei ungefähr 4 bis 6 Minuten, um eine Ausbeute von zirka 85 % zu erreichen. Steigt die Chlordioxidkonzentration gemäß der besonders bevorzugten Ausführungsform auf größer 80 g/l an, so liegt die mittlere Reaktorverweilzeit bei etwa 0,1 Minuten bis 1,5 Minuten, bevorzugt bei 0,3 bis 0,6 Minuten, besonders bevorzugt bei ungefähr 0,4 Minuten für eine 95%ige Ausbeute. Das Minimum der mittleren Verweilzeit kann erreicht werden, wenn die Reaktanten als konzentrierte Lösungen eingesetzt werden, auf die Verwendung von Verdünnungswasser verzichtet wird und der notwendige stöchiometrische Überschuss an Säure, bzw. an Chlor minimiert wird. Wird bei dem erfindungsgemäßen Verfahren der Reaktor auf eine bestimmte Erzeugungsleistung z. B. 10 kg/h ausgelegt, so ergibt sich überraschender Weise die Möglichkeit, die erzeugte Menge Chlordioxid um mehr als das Dreifache zu steigern. Diese hohe Flexibilität der Erzeugungsleistung geht bei größeren Erzeugungsmengen zwar mit einer Umsatzverringerung einher (10 kg/h = 95 % Ausbeute; 30 kg/h = 80 % Ausbeute), jedoch ergeben sich speziell für solche Anwendungsfälle erhebliche Vorteile, bei denen sich temporär und mit niedriger Häufigkeit erhebliche Erhöhungen der Regelbedarfsmengen an Chlordioxid ergeben.

Die Verdünnung der den Reaktionsraumauslass verlassenden Chlordioxidlösung erfolgt so, dass die Erneuerungsrate des zu behandelnden Systems am Reaktionsraumauslass etwa 0,1 m³/h bis 20 m³/h pro Gramm und Stunde erzeugtem Chlordioxid beträgt, vorzugsweise 1 m³/h bis 4 m³/h pro Gramm und Stunde erzeugtem Chlordioxid.

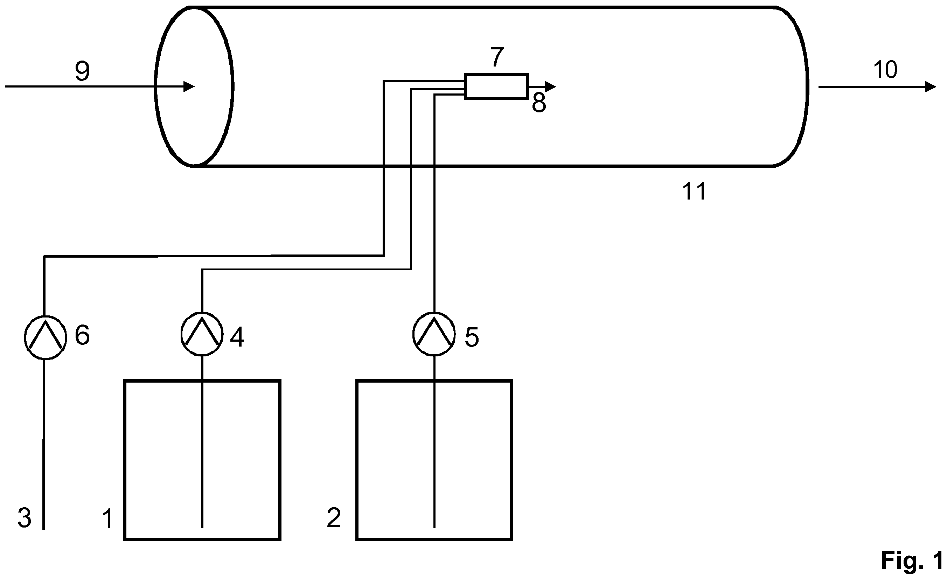

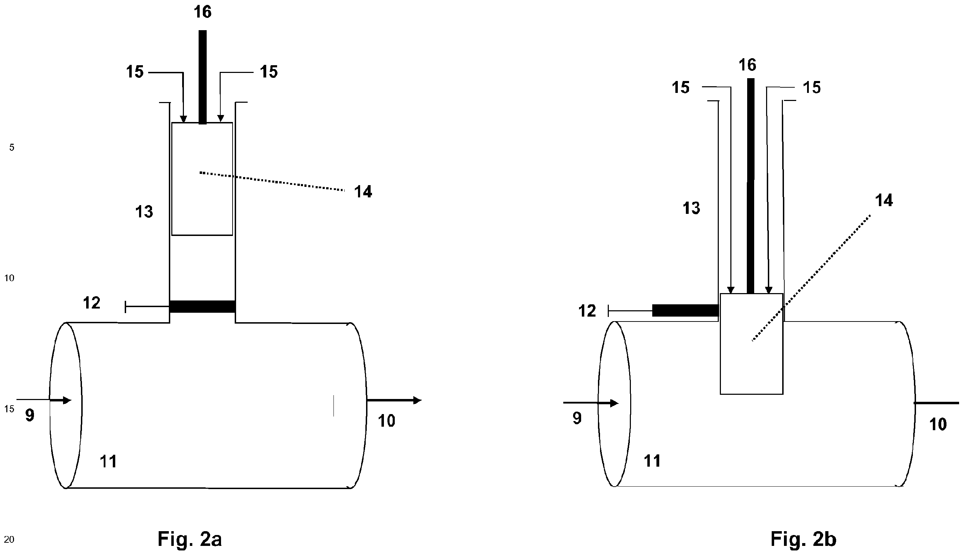

Das erfindungsgemäße Verfahren kann beispielsweise mittels der in den Figur 1 und Figur 2a und 2b dargestellten Vorrichtungen durchgeführt werden.

In der Figur 1 ist ein prinzipieller Aufbau zur Durchführung des Verfahrens mit einem Reaktionsraum in einer Rohrleitung ohne die mobile Vorrichtung dargestellt und ohne auf bestimmte Einsatzchemikalien (Reaktanten) oder Ausführungsformen beschränkt zu sein. Die Aggregate mit der angegebenen Ziffer sind demnach entsprechend allgemein für alle Verfahren mit den verschiedenen möglichen Einsatzchemikalien (Reaktanten) in ihrer Funktion anzuwenden und für den Fachmann leicht erkenntlich.

In der Fig. 1 besteht die Vorrichtung zur Behandlung von Wasser und wässrigen Systemen in Rohrleitungen mit Chlordioxid aus zwei Tanks für die Einsatzchemikalien (Reaktanten), insbesondere einem Chloritlagertank 1 mit Förderpumpe 4 und einem Säurelagertank 2 mit Förderpumpe 5. Die Wasserpumpe 6 wird über den Wasseranschluss 3 versorgt. Alle drei Förderpumpen sind über Einzelleitung mit der Unterseite des Reaktionsraums, bevorzugt Reaktors, 7 verbunden. Im Reaktionsraum, bevorzugt Reaktor, befinden sich Einrichtungen nach dem Stand der Technik, die ein schnelles, vollständiges Vermischen der zugeführten Komponenten im Reaktionsraum gewährleisten. Durch Variation der Konzentrationsgehalte der Reaktanten-Lösungen oder der verwendeten Verdünnungswassermenge wird die Konzentration der entstehenden Chlordioxid-Lösung auf größer 3 g/l, bevorzugt größer 26 g/l und besonders bevorzugt auf größer 80 g/l eingestellt. Die bevorzugte Variante besteht jedoch darin, die Reaktanten ohne Verdünnung durch Wasser (ausgeschaltete Förderpumpe Verdünnungswasser 6) im Reaktionsraum reagieren zu lassen.
Am oberen, entgegengesetzten Ende des Reaktionsraums, bevorzugt Reaktors 7 befindet sich der Reaktionsraumauslass 8.

Eine bevorzugte Vorrichtung für das erfindungsgemäße Verfahren ist in den Fig. 2a (Wartungszustand) und Fig. 2b (Betriebszustand) wiedergegeben. Hierbei ist es erfindungswesentlich, dass sich der Reaktionsraum, bevorzugt Reaktor, in einer mobilen Vorrichtung 14, bevorzugter Weise einem kolbenförmigen Rohr 14, befindet und wobei diese mobile Vorrichtung über einen Reaktionsraumausslass und über Zuleitungen für die Reaktanten und gegebenenfalls Verdünnungswasser verfügt, und mit der Bewegungsvorrichtung 16, bevorzugter Weise einer Gewindestange, in den Führungskanal 13, bevorzugter Weise ein zylindrischen Außenrohr 13, geschoben und bewegt werden kann. Dabei ist das Absperrorgan 12 geschlossenen, so dass kein zu behandelndes System in das Innere des Führungskanals 13 eindringen kann. Nachdem die mobile Vorrichtung 14 in den Führungskanal 13 mit Hilfe der Bewegungsvorrichtung 16 eingeführt worden ist (Fig. 2a, Wartungszustand), kann das Absperrorgan 12 geöffnet werden, ohne dass das zu behandelnde System aus dem Führungskanal 13 austreten kann. Mit Hilfe der Bewegungsvorrichtung 16 kann nun die mobile Vorrichtung 14 und damit der darin befindliche Reaktionsraum, bevorzugt Reaktor, in die systemführende Rohrleitung 11 eingebracht werden (Fig. 2b, Betriebszustand). Die Fläche zwischen dem Führungskanal 13 und der mobilen Vorrichtung 14 ist so ausgelegt, dass diese für das zu behandelnde System 9 nicht durchlässig ist. Die verwendeten Dichtungssysteme sind entweder Bestandteil des Führungskanals 13, der mobilen Vorrichtung 14, oder sie sind in beiden Bauteile vorhanden. Prinzipiell sind alle Dichtungsvarianten geeignet, welche den Austritt von zu behandelndem System 9 aus der Rohrleitung 11 über den Führungskanal 13 ins Freie verhindert. Über die Zuleitungen 15 werden die Reaktanten in den Reaktionsraum, bevorzugt Reaktor, gefördert. Die Durchführungen der Zuleitungen 15 in den Reaktionsraum, bevorzugt Reaktor, sind so ausgeführt, dass auch bei höheren Drücken eine Dichtigkeit dieser Durchführungen gegeben ist.
Bevorzugt werden die Zuleitungen 15 von oben in die mobile Vorrichtung 14 und in den Reaktionsraum geführt. Ebenfalls sind beispielsweise Konstruktionen möglich, bei denen die Zuleitungen für die Reaktanten außerhalb des Reaktionsraums, bevorzugt Reaktors, zum Eingang des Reaktionsraumes geführt werden, wie z. B. von der Seite oder von unten. Die mobile Einrichtung 14 mit dem Reaktionsraum, bevorzugt Reaktor, kann auch so ausgeführt sein, dass diese in einem zusätzlichen Außenrohr angeordnet ist. Es sind alle Verfahrensweisen möglich, die einen Austritt von zu behandelndem System aus der Rohrleitung 11 verhindern und gleichzeitig das Einbringen des Reaktionsraumes in diese Rohrleitung ermöglichen. Bevorzugter Weise ist der Reaktionsraum, bevorzugt Reaktor, ein geschlossener Raum, bei dem sich der Reaktionsraumauslass am gegenüberliegenden Ende der Reaktantenzuleitung 15 befindet. Bevorzugt wird der Reaktionsraumauslass durch Bohrungen in der Reaktionsraumwand gebildet und die mobile Vorrichtung 14 wird so in der Rohrleitung 11 positioniert, dass sich der Reaktionsraumauslass oben befindet.
Das gebildete Chlordioxid kann über den Reaktionsraumauslass in das zu behandelnde System 11 abgegeben werden. Bevorzugter Weise verlässt das mit Chlordioxid behandelte System 10 den Rohrleitungsabschnitt, in dem die Chlordioxidlösung dem zu behandelnden System 9 zugesetzt wird. Durch Variation des Reaktionsraumauslasses (Größe, Art und Anzahl der Öffnungen), Stellung des Reaktionsraumauslasses zur Strömungsrichtung des zu behandelnden Systems, als auch durch unterschiedliche Stellung des Reaktionsraumauslasses bezogen auf den freien Durchmesser der Rohrleitung 11, können verschiedene Verteilungsmuster des erzeugten Chlordioxids im zu behandelnden System 9 in der Rohrleitung 11 eingestellt werden.
In allen Fällen besteht die bevorzugte Variante darin, das Volumen des Reaktionsraums, bevorzugt Reaktors, maximal zu verkleinern. Durch Verwendung von konzentrierten Reaktanten wird bei dieser bevorzugten Variante die Konzentration der Chlordioxidlösung am Reaktionsraumauslass 8 auf größer 80 g/l eingestellt.
Der Führungskanal 13 wird bevorzugter Weise in einer 12 Uhr- oder 6 Uhr-Stellung auf der systemführenden Rohrleitung 11 angebracht. Unabhängig vom Einbauort des Führungskanals 13 sollte der Reaktionsraum, bevorzugt Reaktor, bevorzugter Weise so angeordnet werden, dass sich dieser relativ zum Reaktionsraumauslass unten befindet. Der Vorteil besteht darin, dass gasförmige Bestandteile den Reaktionsraum verlassen können.

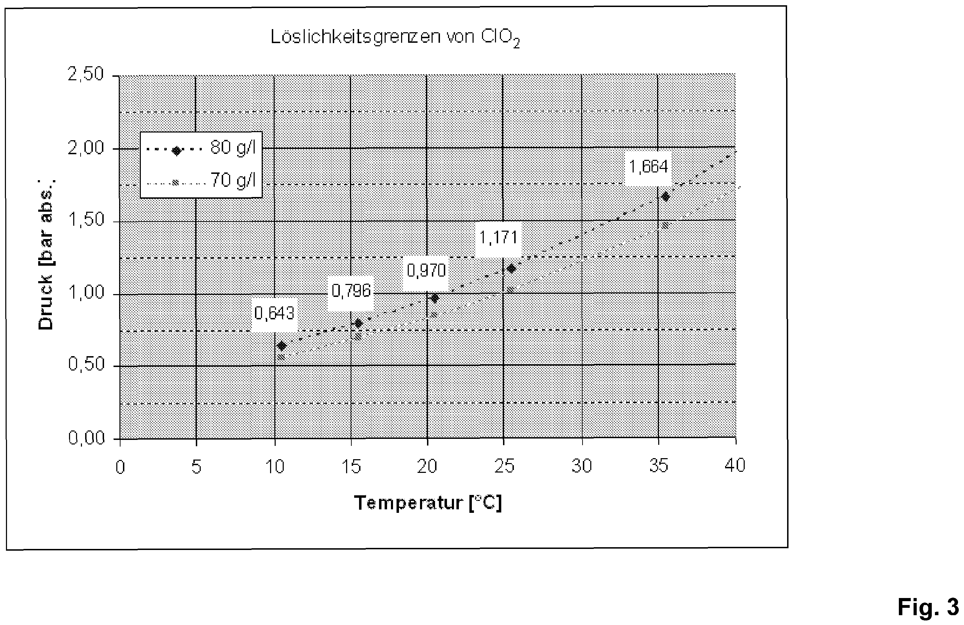

Die bevorzugte Variante besteht darin, die Reaktanten ohne Verdünnung durch Wasser (ausgeschaltete Förderpumpe Verdünnungswasser 6) im Reaktionsraum reagieren zu lassen Dabei kann die Konzentration der entstehenden Lösung am Reaktionsraumauslass 8 auf größer 9 g/l, bevorzugt größer 26 g/l und besonders bevorzugt auf größer 80 g/l Chlordioxid, pro Liter ansteigen. Bei dieser bevorzugten Variante ist es vorteilhaft, das Reaktorvolumen maximal zu verkleinern. In der Regel sind keine weiteren Einrichtungen zur Erhöhung der Erneuerungsrate des zu behandelnden Systems 9 am Reaktionsraumauslass 8 notwendig, um die Konzentration der Chlordioxidlösung, nach dem Eintritt in das zu behandelnde System 9, schnell von vorzugsweise größer 80 g pro Liter in den Milligrammbereich zu verschieben. Ebenfalls ist es in der Regel nicht schwierig, den Druck des zu behandelnden Systems 9 in der Rohrleitung 11 so ein zu stellen, dass die Löslichkeitsgrenze des Chlordioxids in der wässrigen Lösung im Reaktionsraum, bevorzugt Reaktor, 7, wie in Fig. 3 dargestellt, nicht überschritten wird.

In der Fig. 2a und 2b ist ein prinzipieller Aufbau zur Durchführung des erfindungsgemäßen Verfahrens dargestellt, ohne auf bestimmte Ausführungsformen oder Einsatzchemikalien (Reaktanten) beschränkt zu sein. Die Aggregate mit der angegebenen Ziffer sind demnach entsprechend allgemein für alle Verfahren mit den verschiedenen möglichen Einsatzchemikalien (Reaktanten) in ihrer Funktion anzuwenden und für den Fachmann leicht erkenntlich.

### Legende Fig. 1,, Fig. 2a und Fig. 2b :

- 1: Chloritlagertank
- 2: Säurelagertank
- 3: Wasseranschluss
- 4: Förderpumpe Chlorit
- 5: Förderpumpe Säure
- 6: Förderpumpe Verdünnungswasser
- 7: Reaktionsraum (Reaktor)
- 8: Reaktionsraumauslass (Reaktorauslass)
- 9: Zu behandelndes System
- 10: Behandeltes System
- 11: Rohrleitung
- 12: Absperrorgan
- 13: Führungskanal
- 14: Mobile Vorrichtung
- 15: Zuleitungen Reaktanten
- 16: Bewegungsvorrichtung

In der Figur 3 sind die Löslichkeitsgrenzen von Chlordioxid in einer wässrigen Lösung in Abhängigkeit von Druck und Temperatur, beispielhaft für die Chlordioxid-konzentrationen 70 g/l und 80 g/l dargestellt.

Das erfindungsgemäße Verfahren wird durch folgendes Beispiel erläutert, ohne darauf beschränkt zu sein:

### Beispiel 1

Verwendet wird die in den Fig. 2a und 2b beschriebene Vorrichtung. Die mobile Vorrichtung 14 mit den darin enthaltenen Reaktor 7 befindet sich bei geöffnetem Absperrorgan 12 in der systemdurchflossenen Rohrleitung 11, und damit im Betriebszustand. Die Rohrleitung 11 verfügt über einen Durchmesser von 600 mm und bei dem zu behandelnden System 9 in der Rohrleitung 11 handelt es sich um Oberflächenwasser, welches mit einem Massenstrom von 1.000 m³/h über die Rohrleitung 11 einer Aufbereitungsanlage zugeführt wird. Der Druck in der Rohrleitung 11 beträgt 6,2 bar. Über die Zuleitungen 15 werden dem Reaktor pro Stunde 5,9 l einer 25%igen Natriumchlorit-Lösung und 5,3 Liter einer 32%igen Salzsäure-Lösung zugeführt. Der Reaktor verfügt über ein freies Volumen von 0,075 Liter und die Verweilzeit des Reaktionsgemisches im Reaktionsraum beträgt 0,4 Minuten. 11,1 Liter Chlordioxid-Lösung mit einem Gehalt von 92 g/l werden pro Stunde über den Reaktionsraumauslass 8 in das den Reaktor 7 umfließende, -zu behandelnde System- 9 (Oberflächenwasser) abgegeben. Dieses entspricht einer rechnerischen Chlordioxidkonzentration von 1 mg/l. Bei einem Säureüberschuss von 300 % wird das Chlordioxid mit einer Ausbeute von 95 % erzeugt. Der Gehalt an Chlordioxid im zu behandelnden System 9 (Oberflächenwasser) hat sich am Eingang der Wasseraufbereitungsanlage, welche ungefähr 1 km von der Chlordioxiddosierstelle entfernt liegt, auf eine Konzentration von 0,2 mg/l reduziert.

## Patentansprüche

1. Verfahren zur Behandlung von Wasser und wässrigen Systemen in Rohrleitungen mit Chlordioxid (ClO₂), **gekennzeichnet durch** die Merkmale
1. der Reaktionsraum (7), in dem das ClO₂ erzeugt wird, ist vollständig von dem zu behandelnden System umgeben,
2. das den Reaktionsraum (7) umgebene System ist gleichzeitig das zu behandelnde System,
3. der Reaktionsraum (7) ist Bestandteil einer mobilen Vorrichtung (14) und die mobile Vorrichtung kann in die Rohrleitung (11), in der sich das zu behandelnde System befindet, eingebracht und wieder entfernt werden, unabhängig von Druckzustand der Rohrleitung mit dem zu behandelnden System,
4. der Reaktionsraum befindet sich nach der Verwendung der mobilen Vorrichtung in der Rohrleitung mit dem zu behandelnden System,
5. das im Reaktionsraum erzeugte ClO₂ wird in das in der Rohrleitung befindliche, zu behandelnde System abgegeben, **dadurch gekennzeichnet, dass** die mobile Vorrichtung (14) mit dem Reaktionsraum (7) in einem Führungskanal (13) geführt und bewegt wird, welcher einen Zugang zu der Rohrleitung (11) mit dem zu behandelnden System hat, wobei ein Absperrorgan (12) den Führungskanal (13) gegen die Rohrleitung (11) abschieben.

2. Verfahren nach Anspruch 1,
**dadurch gekennzeichnet,**
**dass** der Reaktionsraum ein Reaktor ist.

3. Verfahren nach mindestens einem der vorherigen Ansprüche,
**dadurch gekennzeichnet,**
**dass** der Reaktor ein Rohrreaktor ist.

4. Verfahren nach mindestens einem der vorherigen Ansprüche,
**dadurch gekennzeichnet,**
**dass** die Reaktionszeit der Reaktanten im Reaktionsraum von 4 bis 60 Minuten, bevorzugt 4 bis 6 Minuten, besonders bevorzugt von 0,1 bis 1,5 Minuten, ganz besonders bevorzugt 0,3 Minuten bis 0,6 Minuten variiert.

5. Verfahren nach mindestens einem der vorherigen Ansprüche,
**dadurch gekennzeichnet,**
**dass** das Chlordioxid aus einem Alkali-Chlorit-Salz und Salzsäure (Reaktanten) erzeugt wird.

6. Verfahren nach mindestens einem der vorherigen Ansprüche,
**dadurch gekennzeichnet,**
**dass** das Chlordioxid aus Natriumchlorit und Salzsäure (Reaktanten) erzeugt wird.

7. Verfahren nach mindestens einem der vorherigen Ansprüche,
**dadurch gekennzeichnet,**
**dass** das Chlordioxid aus Natriumchlorit in einer wässrigen Lösung von 3,5 % bis 40 % erzeugt wird.

8. Verfahren nach mindestens einem der vorherigen Ansprüche,
**dadurch gekennzeichnet,**
**dass** das Chlordioxid aus Salzsäure in einer Konzentration von 3,5 % bis 42% erzeugt wird.

9. Verfahren nach mindestens einem der vorherigen Ansprüche,
**dadurch gekennzeichnet,**
**dass** das Chlordioxid aus Natriumchlorit und Chlor (Reaktanten) erzeugt wird.

10. Verfahren nach mindestens einem der vorherigen Ansprüche,
**dadurch gekennzeichnet,**
**dass** Verdünnungswasser verwendet wird.

11. Verfahren nach mindestens einem der vorherigen Ansprüche,
**dadurch gekennzeichnet,**
**dass** ohne Verdünnungswasser verfahren wird.

12. Verfahren nach mindestens einem der vorherigen Ansprüche,
**dadurch gekennzeichnet,**
**dass** der Reaktor ohne eine Druckregeleinrichtung betrieben wird.

13. Verfahren nach mindestens einem der vorherigen Ansprüche,
**dadurch gekennzeichnet, dass** der Reaktor über einen freien Ausgang am Reaktorausgang verfügt, so dass der Druck im Reaktionsraum nur bis zu dem Wert ansteigen kann, welcher durch das umgebende System auf den Reaktionsraum ausübt wird.

14. Verfahren nach mindestens einem der vorherigen Ansprüche,
**dadurch gekennzeichnet, dass** die Verdünnung der den Reaktionsraumauslass verlassenden Chlordioxidlösung so erfolgt, dass die Erneuerungsrate des zu behandelnden Systems am Reaktionsraumauslass 0,1 m³/h bis 20 m³/h pro Gramm und Stunde erzeugtem Chlordioxid beträgt, vorzugsweise 1 m³/h bis 4 m³/h pro Gramm und Stunde erzeugtem Chlordioxid.

15. Verfahren nach mindestens einem der vorherigen Ansprüche,
**dadurch gekennzeichnet, dass** das im Reaktionsraum entstehende ClO₂ aus dem Reaktionsraum direkt in das zu behandelnde System gefahren wird, wobei die Konzentrationen der Einsatzchemikalien so gewählt werden, dass die Konzentration des gebildeten Chlordioxids am Reaktorausgang bei größer 3 g/l Lösung, bevorzugt größer 26 g/l Lösung und besonders bevorzugt bei größer 80 g/l Lösung liegt.

16. Verfahren nach mindestens einem der vorherigen Ansprüche, **gekennzeichnet durch** die Merkmale
1. der Reaktionsraum, in dem das ClO₂ erzeugt wird, ist ein mit einem freien Ausgang ausgestatteter Reaktor ohne Druckregeleinrichtung und dieser ist vollständig vom zu behandelnden System umgeben,
2. das den Reaktionsraum umgebene System ist gleichzeitig das zu behandelnde System,
5. das im Reaktionsraum entstehende ClO₂ wird aus dem Reaktionsraum direkt in das zu behandelnde System gefahren, wobei die Kombination aus der Konzentrationen der Einsatzchemikalien und gegebenenfalls verwendetem Verdünnungswasser so gewählt wird, dass die Konzentration des gebildeten Chlordioxids am Reaktorausgang bei größer 3 g/l Lösung bevorzugt größer 26 g/l Lösung und besonders bevorzugt bei größer 80 g/l Lösung liegt.

17. Verfahren nach einem der der vorherigen Ansprüche,
**gekennzeichnet durch** die Merkmale
1. der Reaktionsraum, in dem das ClO₂ erzeugt wird, ist ein mit einem freien Ausgang ausgestatteter Reaktor ohne Druckregeleinrichtung und dieser ist vollständig vom zu behandelnden System umgeben,
2. das den Reaktionsraum umgebene System ist gleichzeitig das zu behandelnde System und dieses übt auf die chlordioxidhaltige Lösung im Reaktionsraum einen Druck in einer Größe aus, dass die Löslichkeitsgrenze von Chlordioxid in Wasser bei gegebener Temperatur nicht überschritten wird,
5. das im Reaktionsraum entstehende ClO₂ wird aus dem Reaktionsraum direkt in das zu behandelnde System gefahren, wobei die Kombination aus der Konzentrationen der Einsatzchemikalien und gegebenenfalls verwendetem Verdünnungswasser so gewählt wird, dass die Konzentration des gebildeten Chlordioxids am Reaktorausgang bei größer 3 g/l Lösung bevorzugt größer 26 g/l Lösung und besonders bevorzugt bei größer 80 g/l Lösung liegt.

18. Verfahren nach mindestens einem der vorherigen Ansprüche,
**dadurch gekennzeichnet,**
**dass** konzentrierte Einsatzchemikalien eingesetzt werden und nach dem Salzsäurechlorit-Verfahren (1.) gearbeitet wird, wobei die Konzentration der Salzsäure 33 - 42 % und die der Natriumchlorit-Lösung 25 - 40 % beträgt.

19. Verfahren nach mindestens einem der vorherigen Ansprüche,
**dadurch gekennzeichnet,**
**dass** die mobile Vorrichtung aus einem kolbenförmigen Rohr besteht.

20. Verfahren nach mindestens einem der vorherigen Ansprüche,
**dadurch gekennzeichnet,**
**dass** bei der Verwendung von Titan als Reaktormaterial, die Zuführung der Reaktionslösungen sofern Salzsäure verwendet wird, diese über eine Leitung aus Kunststoff in der Mitte des Reaktors erfolgt, und dass die Zugabe des Reaktionspartners, bei welchem es sich in jedem Fall um ein Oxidationsmittel handelt, wie z. B. Natriumchlorit, ortsnah zur Salzsäurezugabestelle erfolgt.

21. Verfahren nach mindestens einem der vorherigen Ansprüche,
**dadurch gekennzeichnet,**
**dass** sich der Reaktionsraum in der Hauptrohrleitung des zu behandelnden Systems und nicht in einer Bypassleitung zur Hauptleitung befindet, welche durch vor und hinter dem in der Bypassleitung liegenden Zugabeort von Chlordioxid zum zu behandelnden System befindliche Absperrorgane, räumlich isolierbar ist.

22. Verfahren nach mindestens einem der vorherigen Ansprüche,
**dadurch gekennzeichnet,**
**dass** die mobile Vorrichtung mit einer Bewegungsvorrichtung durch einen Führungskanal in die Rohrleitung eingebracht werden kann, wobei sich zwischen dem Führungskanal und der Rohrleitung ein Absperrorgan befindet.

23. Verfahren nach mindestens einem der vorherigen Ansprüche,
**dadurch gekennzeichnet,**
**dass** der Führungskanal aus einem zylindrischem Außenrohr und/oder die mobile Vorrichtung aus einem kolbenförmigen Rohr besteht.

## Claims

1. Method of treating water and aqueous systems in pipes with chlorine dioxide (ClO₂), **characterized by** the features
1. the reaction space (7) in which the ClO₂ is generated is completely surrounded by the system to be treated,
2. the system surrounding the reaction space is simultaneously the system to be treated,
3. the reaction space (7) is a component of a mobile device (14) and the mobile device can be introduced into the pipe (11) in which the system to be treated is situated and removed again independently of the pressure state of the pipe containing the system to be treated,
4. the reaction space is situated after use of the mobile device in the pipe containing the system to be treated,
5. the ClO₂ generated in the reaction space is delivered to the system to be treated which is situated in the pipe, **characterized in that** the mobile device (14) with the reaction space (7) is conducted and moved into a guide channel (13), which has access to the pipe (11) having the system to be treated, wherein a shutoff element (12) shuts off the guide channel (13) from the pipe (11).

2. Method according to Claim 1, **characterized in that** the reaction space is a reactor.

3. Method according to at least one of the preceding claims, **characterized in that** the reactor is a tubular reactor.

4. Method according to at least one of the preceding claims, **characterized in that** the reaction time of the reactants in the reaction space varies from 4 to 60 minutes, preferably 4 to 6 minutes, particularly preferably from 0.1 to 1.5 minutes, very particularly preferably 0.3 minute to 0.6 minute.

5. Method according to at least one of the preceding claims, **characterized in that** the chlorine dioxide is generated from an alkali metal chlorite salt and hydrochloric acid (reactants).

6. Method according to at least one of the preceding claims, **characterized in that** the chlorine dioxide is generated from sodium chlorite and hydrochloric acid (reactants).

7. Process according to at least one of the preceding claims, **characterized in that** the chlorine dioxide is generated from sodium chlorite in an aqueous solution of 3.5% to 40%.

8. Method according to at least one of the preceding claims, **characterized in that** the chlorine dioxide is generated from hydrochloric acid in a concentration from 3.5% to 42%.

9. Method according to at least one of the preceding claims, **characterized in that** the chlorine dioxide is generated from sodium chlorite and chlorine (reactants).

10. Method according to at least one of the preceding claims, **characterized in that** dilution water is used.

11. Method according to at least one of the preceding claims, **characterized in that** no dilution water is employed.

12. Method according to at least one of the preceding claims, **characterized in that** the reactor is operated without a pressure control appliance.

13. Method according to at least one of the preceding claims, **characterized in that** the reactor has a free outlet at the reactor outlet in such a manner that the pressure in the reaction space can only increase to the value which is exerted on the reaction space by the surrounding system.

14. Method according to at least one of the preceding claims, **characterized in that** the chlorine dioxide solution leaving the reaction space outlet is diluted in such a manner that the renewal rate at the reaction space outlet of the system to be treated is 0.1 m³/h to 20 m³/h per gram and hour of chlorine dioxide generated, preferably 1 m³/h to 4 m³/h per gram and hour of chlorine dioxide generated.

15. Method according to at least one of the preceding claims, **characterized in that** the ClO₂ formed in the reaction space is passed out of the reaction space directly into the system to be treated, the concentrations of the starting chemicals being selected in such a manner that the concentration at the reactor outlet of the chlorine dioxide formed is greater than 3 g/l of solution, preferably greater than 26 g/l of solution, and particularly preferably greater than 80 g/l of solution.

16. Method according to at least one of the preceding claims, **characterized by** the features
1. the reaction space in which the ClO₂ is generated is a reactor without a pressure control appliance and equipped with a free outlet and this reactor is completely surrounded by the system to be treated,
2. the system surrounding the reaction space is simultaneously the system to be treated,
5. the ClO₂ formed in the reaction space is passed out of the reaction space directly into the system to be treated, the combination of the concentration of starting chemicals and dilution water optionally used being selected in such a manner that the concentration at the reactor outlet of the chlorine dioxide formed is greater than 3 g/l of solution, preferably greater than 26 g/l of solution, and particularly preferably greater than 80 g/l of solution.

17. Method according to one of the preceding claims, **characterized by** the features
1. the reaction space in which the ClO₂ is generated is a reactor without a pressure control appliance and equipped with a free outlet and this reactor is completely surrounded by the system to be treated,
2. the system surrounding the reaction space is simultaneously the system to be treated and this exerts a pressure on the chlorine-dioxide-containing solution in the reaction space of a magnitude such that the solubility limit of chlorine dioxide in water at a given temperature is not exceeded,
5. the ClO₂ formed in the reaction space is passed out of the reaction space directly into the system to be treated, the combination of the concentrations of the starting chemicals and dilution water optionally used being selected in such a manner that the concentration at the reactor outlet of the chlorine dioxide formed is greater than 3 g/l of solution, preferably greater than 26 g/l of solution, and particularly preferably greater than 80 g/l of solution.

18. Method according to at least one of the preceding claims, **characterized in that** concentrated starting chemicals are used and the hydrochloric acid chlorite method (1.) is employed, the concentration of the hydrochloric acid being 33-42% and that of the sodium chlorite solution being 25-40%.

19. Method according to at least one of the preceding claims, **characterized in that** the mobile device consists of a piston-like tube.

20. Method according to at least one of the preceding claims, **characterized in that** when titanium is used as reactor material, the reaction solutions are fed in such a manner that when hydrochloric acid is used , the feeding takes place via a plastic line into the centre of the reactor, and **in that** the feeding in of the reaction partner, which in this case is an oxidizing agent, e.g. sodium chlorite, takes place close to the hydrochloric acid feed point.

21. Method according to at least one of the preceding claims, **characterized in that** the reaction space is situated in the main pipe of the system to be treated and not in a bypass line to the main line, which can be spatially isolated by shutoff elements situated upstream and downstream of the site in the bypass line for feeding chlorine dioxide to the system to be treated.

22. Method according to at least one of the preceding claims, **characterized in that** the mobile device can be introduced into the pipe via a feed channel using a movement device, a shutoff element being situated between the feed channel and the pipe.

23. Method according to at least one of the preceding claims, **characterized in that** the feed channel consists of a cylindrical outer tube and/or the mobile device consists of a piston-like tube.

## Revendications

1. Procédé de traitement d'eau et de systèmes aqueux dans des canalisations avec du dioxyde de chlore (ClO₂), **caractérisé par** les caractéristiques suivantes :
1. la chambre de réaction (7), dans laquelle le ClO₂ est formé, est entièrement entourée par le système à traiter,
2. le système entourant la chambre de réaction (7) est simultanément le système à traiter,
3. la chambre de réaction (7) fait partie d'un dispositif mobile (14) et le dispositif mobile peut être introduit dans et extrait de la canalisation (11) dans laquelle se trouve le système à traiter, indépendamment de l'état de pression de la canalisation contenant le système à traiter,
4. la chambre de réaction se trouve après l'utilisation du dispositif mobile dans la canalisation contenant le système à traiter,
5. le ClO₂ formé dans la chambre de réaction est émis dans le système à traiter qui se trouve dans la canalisation, **caractérisé en ce que** le dispositif mobile (14) comprenant la chambre de réaction (7) est introduit et déplacé dans un canal de guidage (13), qui comprend une entrée vers la canalisation (11) contenant le système à traiter, un organe de blocage (12) isolant le canal de guidage (13) de la canalisation (11).

2. Procédé selon la revendication 1, **caractérisé en ce que** la chambre de réaction est un réacteur.

3. Procédé selon au moins l'une quelconque des revendications précédentes, **caractérisé en ce que** le réacteur est un réacteur tubulaire.

4. Procédé selon au moins l'une quelconque des revendications précédentes, **caractérisé en ce que** la durée de réaction des réactifs dans la chambre de réaction est de 4 à 60 minutes, de préférence de 4 à 6 minutes, de manière particulièrement préférée de 0,1 à 1,5 minute, de manière tout particulièrement préférée de 0,3 minute à 0,6 minute.

5. Procédé selon au moins l'une quelconque des revendications précédentes, **caractérisé en ce que** le dioxyde de chlore est formé à partir d'un sel de chlorite alcalin et d'acide chlorhydrique (réactifs).

6. Procédé selon au moins l'une quelconque des revendications précédentes, **caractérisé en ce que** le dioxyde de chlore est formé à partir de chlorite de sodium et d'acide chlorhydrique (réactifs).

7. Procédé selon au moins l'une quelconque des revendications précédentes, **caractérisé en ce que** le dioxyde de chlore est formé à partir de chlorite de sodium dans une solution aqueuse de 3,5 % à 40 %.

8. Procédé selon au moins l'une quelconque des revendications précédentes, **caractérisé en ce que** le dioxyde de chlore est formé à partir d'acide chlorhydrique en une concentration de 3,5 % à 42 %.

9. Procédé selon au moins l'une quelconque des revendications précédentes, **caractérisé en ce que** le dioxyde de chlore est formé à partir de chlorite de sodium et de chlore (réactifs).

10. Procédé selon au moins l'une quelconque des revendications précédentes, **caractérisé en ce qu'**une eau de dilution est utilisée.

11. Procédé selon au moins l'une quelconque des revendications précédentes, **caractérisé en ce que** le procédé est réalisé sans eau de dilution.

12. Procédé selon au moins l'une quelconque des revendications précédentes, **caractérisé en ce que** le réacteur est exploité sans dispositif de régulation de la pression.

13. Procédé selon au moins l'une quelconque des revendications précédentes, **caractérisé en ce que** le réacteur dispose d'une sortie libre au niveau de la sortie du réacteur, de telle sorte que la pression dans la chambre de réaction ne puisse augmenter que jusqu'à la valeur qui est exercée par le système qui l'entoure sur la chambre de réaction.

14. Procédé selon au moins l'une quelconque des revendications précédentes, **caractérisé en ce que** la dilution de la solution de dioxyde de chlore quittant la sortie de la chambre de réaction a lieu de telle sorte que le taux de renouvellement du système à traiter au niveau de la sortie de la chambre de réaction soit de 0,1 m³/h à 20 m³/h par gramme et heure de dioxyde de chlore formé, de préférence de 1 m³/h à 4 m³/h par gramme et heure de dioxyde de chlore formé.

15. Procédé selon au moins l'une quelconque des revendications précédentes, **caractérisé en ce que** le ClO₂ formé dans la chambre de réaction est acheminé directement depuis la chambre de réaction dans le système à traiter, les concentrations des produits chimiques de charge étant choisies de telle sorte que la concentration du dioxyde de chlore formé à la sortie du réacteur soit supérieure à 3 g/l de solution, de préférence supérieure à 26 g/l de solution et de manière particulièrement préférée supérieure à 80 g/l de solution.

16. Procédé selon au moins l'une quelconque des revendications précédentes, **caractérisé par** les caractéristiques suivantes :
1. la chambre de réaction dans laquelle le ClO₂ est formé est un réacteur équipé d'une sortie libre sans dispositif de régulation de la pression, et celui-ci est entièrement entouré par le système à traiter,
2. le système entourant la chambre de réaction est simultanément le système à traiter,
5. le ClO₂ formé dans la chambre de réaction est acheminé directement depuis la chambre de réaction dans le système à traiter, la combinaison des concentrations des produits chimiques de charge et de l'eau de dilution éventuellement utilisée étant choisie de telle sorte que la concentration du dioxyde de chlore formé à la sortie du réacteur soit supérieure à 3 g/l de solution, de préférence supérieure à 26 g/l de solution et de manière particulièrement préférée supérieure à 80 g/l de solution.

17. Procédé selon au moins l'une quelconque des revendications précédentes, **caractérisé par** les caractéristiques suivantes :
1. la chambre de réaction dans laquelle le ClO₂ est formé est un réacteur équipé d'une sortie libre sans dispositif de régulation de la pression, et celui-ci est entièrement entouré par le système à traiter,
2. le système entourant la chambre de réaction est simultanément le système à traiter, et celui-ci exerce sur la solution contenant du dioxyde de chlore dans la chambre de réaction une pression telle que la limite de solubilité du dioxyde de chlore dans l'eau ne soit pas dépassée à une température donnée,
5. le ClO₂ formé dans la chambre de réaction est acheminé directement depuis la chambre de réaction dans le système à traiter, la combinaison des concentrations des produits chimiques de charge et de l'eau de dilution éventuellement utilisée étant choisie de telle sorte que la concentration du dioxyde de chlore formé à la sortie du réacteur soit supérieure à 3 g/l de solution, de préférence supérieure à 26 g/l de solution et de manière particulièrement préférée supérieure à 80 g/l de solution.

18. Procédé selon au moins l'une quelconque des revendications précédentes, **caractérisé en ce que** des produits chimiques de charge concentrés sont utilisés, et le procédé au chlorite d'acide chlorhydrique (1.) est utilisé, la concentration de l'acide chlorhydrique étant de 33 à 42 % et celle de la solution de chlorite de sodium étant de 25 à 40 %.

19. Procédé selon au moins l'une quelconque des revendications précédentes, **caractérisé en ce que** le dispositif mobile est constitué par un tube en forme de piston.

20. Procédé selon au moins l'une quelconque des revendications précédentes, **caractérisé en ce que**, lors de l'utilisation de titane en tant que matériau de réacteur, si de l'acide chlorhydrique est utilisé, l'introduction des solutions de réaction a lieu pour celui-ci par une conduite en matière plastique au milieu du réacteur, et **en ce que** l'ajout du partenaire de réaction, qui est dans chaque cas un oxydant, tel que p. ex. le chlorite de sodium, a lieu à proximité dans l'espace de l'emplacement d'ajout de l'acide chlorhydrique.

21. Procédé selon au moins l'une quelconque des revendications précédentes, **caractérisé en ce que** la chambre de réaction se trouve dans la canalisation principale du système à traiter et non dans une conduite de dérivation de la conduite principale, qui peut être isolée dans l'espace par des organes de blocage se trouvant avant et après l'emplacement d'ajout de dioxyde de chlore au système à traiter situé dans la conduite de dérivation.

22. Procédé selon au moins l'une quelconque des revendications précédentes, **caractérisé en ce que** le dispositif mobile peut être introduit dans la canalisation au travers d'un canal de guidage avec un dispositif de déplacement, un organe de blocage se trouvant entre le canal de guidage et la canalisation.

23. Procédé selon au moins l'une quelconque des revendications précédentes, **caractérisé en ce que** le canal de guidage est constitué par un tube extérieur cylindrique et/ou le dispositif mobile est constitué par un tube en forme de piston.
